Europäisches Patentamt

European Patent Office

Office européen des brevets

(11) Numéro de publication: **0 380 181 B1**

(12) **FASCICULE DE BREVET EUROPEEN**

(45) Date de publication de fascicule du brevet: **03.08.94**

(51) Int. Cl.5: **H04N 7/167**, H04N 11/00

(21) Numéro de dépôt: **90200165.0**

(22) Date de dépôt: **23.01.90**

(54) **Etage d'émission pour système de transmission d'images de télévision à définition étendue, système de transmission incluant un tel étage, et étage de réception pour un tel système.**

(30) Priorité: **27.01.89 FR 8901020**

(43) Date de publication de la demande:
**01.08.90 Bulletin 90/31**

(45) Mention de la délivrance du brevet:
**03.08.94 Bulletin 94/31**

(84) Etats contractants désignés:
**DE FR GB**

(56) Documents cités:
**EP-A- 0 103 339**
**EP-A- 0 279 625**

**IEEE TRANSACTIONS ON BROADCASTING, vol. BC-33, no. 4 décembre 1987, pages 116-123, IEEE, New York, US; M.A. ISNARDI et al.: "Encoding for compatibility and recoverability in the ACTV system"**

**TECH. 3258-F, octobre 1986, pages 67-79, Union Européenne de Radiodiffusion, Bruxelles, BE; G.T. WATERS: "Spécification des systèmes de la famille MAC/paquets", partie 2, section 6: "Embrouillage de l'image"**

(73) Titulaire: **LABORATOIRES D'ELECTRONIOUE PHILIPS**
**3, Avenue Descartes**
**F-94450 Limeil-Brévannes(FR)**

(84) Etats contractants désignés:
**FR**

(73) Titulaire: **N.V. Philips' Gloeilampenfabrieken**
**Groenewoudseweg 1**
**NL-5621 BA Eindhoven(NL)**

(84) Etats contractants désignés:
**DE GB**

(72) Inventeur: **Marie, Gérard, Société Civile S.P.I.D.**
**209 rue de l'Université**
**F-75007 Paris(FR)**
Inventeur: **Chantelou, Olivier, Société Civile S.P.I.D.**
**209 rue de l'Université**
**F-75007 Paris(FR)**

(74) Mandataire: **Landousy, Christian et al**
**Société Civile S.P.I.D.**
**156, Boulevard Haussmann**
**F-75008 Paris (FR)**

## Description

La présente invention concerne un étage d'émission de signaux correspondant à des images de télévision de format traditionnel 4/3 selon les normes NTSC, PAL ou SECAM, comprenant des moyens pour transmettre lesdits signaux correspondant à des images de format traditionnel et des moyens pour transmettre au moins un signal vidéo d'extension d'une caractéristique d'image dans au moins une voie de transmission.

L'invention concerne également un système de transmission d'images de télévision à définition étendue incluant un tel étage d'émission, ainsi qu'un étage de réception pour un tel système de transmission.

En Europe, l'approche haute définition en matière de télévision prévoit une norme dite HDMAC, compatible avec la norme MAC qui sera prochainement utilisée en télédiffusion directe par satellite, et qui pourrait être utilisée également, ultérieurement, en diffusion terrestre. Pendant les premières années de diffusion selon cette norme HDMAC, il se formera un parc de récepteurs de télévision à haute définition qui devront aussi restituer des images émises selon les normes PAL et SECAM.

En raison de la très grande différence de qualité entre ces dernières images PAL ou SECAM et les images HDMAC, il serait souhaitable, en Europe, que les normes PAL et SECAM voient leur définition étendue, par exemple par des procédés similaires à ceux envisagés aux Etats-Unis dans le cadre de la norme NTSC.

Aux Etats-Unis, le FCC a demandé en effet que la télévision à définition étendue, dite EDTV ("Extended Definition Television"), soit compatible avec la norme NTSC existante. Le signal émis pourra alors occuper soit le même canal de 6 MHz de large que la norme NTSC actuelle, soit un canal plus large (9 MHz ou 12 MHz, d'un seul tenant ou en deux canaux séparés), mais il devra être reçu de façon compatible par les récepteurs existants prévus pour la norme NTSC.

Une norme étendue prévoit, plus précisément, d'ajouter aux signaux transmis actuellement selon la norme existante NTSC, PAL ou SECAM une ou plusieurs des informations suivantes :

    a) des signaux correspondant aux bords de l'image, à droite et à gauche, de façon à agrandir le format de celle-ci de 4/3 à 16/9 ;

    b) des signaux correspondant à l'augmentation de la résolution de l'image dans le sens horizontal ;

    c) des signaux correspondant à l'augmentation de la résolution de l'image dans le sens vertical, et qui peuvent éventuellement être combinés aux signaux (b) pour former une information bidimensionnelle ;

    d) des signaux correspondant à la diffusion des voies son en codage numérique, avec une qualité voisine de celle des disques audio à lecture laser (ou disques compacts).

Pour transmettre cette ou ces informations supplémentaires, la place temporelle laissée libre pendant les périodes de suppression ligne et trame n'est pas suffisante. On compte donc les transmettre également dans la ou les trois voies suivantes :

    (A) sur une porteuse ayant la même fréquence que la porteuse image, mais modulée en quadrature avec celle-ci ;

    (B) sur une sous-porteuse ayant une fréquence voisine des fréquences sous-porteuses qui sont utilisées pour transmettre la chrominance, mais en utilisant un filtrage spatio-temporel (filtre en peigne trame) à l'émission et à la réception de façon à séparer les deux informations ;

    (C) éventuellement, dans un canal de 3 ou 6 MHz de large qui peut être situé juste au-dessus de la bande occupée par les signaux vidéo, ou juste au-dessous, ou complètement séparé, cette troisième voie occupant alors un des canaux, dits tabous, interdits en diffusion terrestre pour éviter les interférences liées au manque de sélectivité des récepteurs (surtout des récepteurs anciens).

Dans les récepteurs de nouvelle génération, des méthodes de détection et de filtrage précises (détection synchrone, filtre en peigne, réjection améliorée de la fréquence image, filtre IF plus abrupt) permettront de réduire à un niveau négligeable les interférences entre le signal vidéo classique et les signaux supplémentaires (a), (b), (c), (d) transmis dans les voies (A), (B), (C). Par contre, dans les récepteurs existants, et en particulier dans les modèles les plus anciens, des interférences importantes se produiront, ce qui conduira à une dégradation de la qualité de l'image compatible reçue par ces récepteurs.

Ces interférences seront les plus gênantes lorsqu'elles correspondront à des parties d'image non corrélées avec l'image vidéo classique reçue, par exemple à des bords, ou lorsqu'elles donneront lieu à d'autres images résultant des interférences entre les canaux interdits et les canaux existants. En effet, il apparaît alors, en superposition avec l'image vidéo classique, une image fantôme (éventuellement réduite à des contours), qui est d'autant plus gênante que les formes et les mouvements qu'elle restitue ne sont pas corrélés avec l'image que l'on veut recevoir.

Les demanderesses se sont alors rendu compte que les signaux (d), transmis sous forme numérique, seront les moins gênants, car ils apparaîtront comme un bruit incohérent vis-à-vis de l'image compatible, et qu'une partie des signaux (b) et (c), celle qui correspond aux informations provenant de la partie de l'image transmise dans le standard d'origine au format 4/3, est complètement corrélée avec l'image compatible et pourra donc ne produire que des interférences peu gênantes si elle est transmise en synchronisme avec cette image compatible. Par contre, les signaux (a) et la partie des signaux (b) et (c) correspondant aux bords de l'image seront toujours particulièrement gênants.

Le problème à résoudre est donc de supprimer ou de réduire notablement les perturbations entraînées par l'existence de ces interférences.

L'invention concerne, à cet effet, un étage d'émission caractérisé en ce qu'il comprend des moyens de brouillage d'au moins une fraction dudit ou desdits signaux vidéo d'extension.

Conformément à la solution proposée, l'invention concerne également un étage d'émission, prévu pour transmettre des signaux vidéo (a) d'extension du format des images et/ou des signaux vidéo (b) d'extension de la définition horizontale desdites images et/ou des signaux vidéo (c) d'extension de la définition verticale desdites images, caractérisé en ce que lesdits moyens de brouillage comprennent des moyens de brouillage ligne par ligne d'au moins l'un desdits signaux (a), (b), (c).

Grâce à de telles structures, les signaux (a), (b), (c), ou ceux de ces signaux, ou d'une manière générale la fraction du ou des signaux qui ont été brouillés, prennent une apparence erratique, et ne sont plus corrélés avec l'image d'origine de définition normale. Par suite, les interférences qui peuvent subsister entre ce ou ces signaux et le ou les signaux vidéo d'origine correspondant à l'image normale ont une structure incohérente et deviennent peu perceptibles.

Dans le mode préféré de réalisation de l'invention, c'est la totalité desdits signaux d'extension (a), (b), (c) qui subit le brouillage prévu dans le système. Cependant, il peut être intéressant de réduire la complexité de ce système en diminuant la capacité mémoire nécessaire. Dans ce cas, on exclut de l'opération de brouillage une fraction des signaux d'extension, par exemple en exemptant du brouillage la fraction desdits signaux (b) et (c) qui correspond au milieu de l'image, c'est-à-dire à l'image normale sans extension de définition.

Un procédé de brouillage particulièrement bien adapté au cas présent consiste à opérer sur chaque ligne une permutation circulaire à partir d'une adresse variable x définie par un générateur de séquences pseudoaléatoires. L'image devient en effet complètement décorrélée dans le sens horizontal, avec une disparition complète des structures et des contours initiaux. Dès lors, toute interférence entre l'un ou l'autre des signaux (a), (b), (c) et l'image compatible apparaît comme un bruit dans l'image reçue, ce qui constitue une perturbation dégradant cette image de façon nettement moins perceptible qu'une perturbation consécutive à des interférences dues à une image fantôme.

De préférence, l'adresse x du point de coupure du signal sur chaque ligne est donnée par un mot pseudoaléatoire de p bits, délivré par le générateur de séquences pseudoaléatoires fonctionnant à une fréquence au moins égale à p fois la fréquence ligne. Si par exemple cette fréquence est égale à 8 fois la fréquence ligne, on disposera, au cours de chaque période de ligne, d'un mot pseudoaléatoire de 8 bits permettant de choisir l'adresse du point de coupure du signal parmi 256 positions distinctes $x_0$ à $x_{n-1}$. Pour des raisons de simplicité, on aura intérêt à ce que cette fréquence de fonctionnement soit égale à p fois, ou à un multiple de p fois, ladite fréquence ligne.

Le brouillage par permutation circulaire dans chaque ligne à partir d'une adresse pseudoaléatoire ne décorrèle l'image que dans le sens horizontal. En d'autres termes, ce brouillage ne transforme le spectre de l'image en un spectre de bruit que pour les fréquences supérieures à la demi-fréquence ligne, soit 8 kHz environ. Cela peut être insuffisant lorsque l'image comprend des bandes horizontales fortement contrastées, par exemple un horizon séparant la terre d'un ciel très lumineux.

Pour améliorer l'efficacité du brouillage dans de telles situations, on peut rendre celui-ci plus complexe en effectuant un brassage pseudoaléatoire de tout ou partie des lignes entre elles. On peut utiliser, par exemple, pour le brassage, une permutation circulaire à l'intérieur d'un groupe de lignes consécutives, en prévoyant alors la capacité mémoire correspondante qui permet d'effectuer l'écriture et la lecture de ce groupe de lignes. L'adresse variable y de la ligne à partir de laquelle se fait la modification de l'ordre de transmission des lignes peut être obtenue sous la forme d'un nombre $\ell$ de bits issus d'une séquence pseudoaléatoire, tel que $2^\ell$ soit inférieur ou égal au nombre L de lignes.

Les $\ell$ bits peuvent être issus du même générateur de séquences pseudoaléatoires que celui qui fournit les p bits déterminant l'adresse de la coupure dans chaque ligne. On peut, par exemple, ne pas changer la fréquence de fonctionnement du générateur et choisir les $\ell$ bits de l'adresse y de brassage parmi les L x p bits fournis par le générateur en L périodes lignes. On peut également faire fonctionner le générateur à une fréquence plus élevée, toujours multiple de la fréquence ligne, par exemple à une fréquence égale à (p + 1) fois la fréquence ligne, et utiliser d'une part p bits toutes les périodes lignes pour déterminer les adresses de coupure x, et d'autre part $\ell$ bits choisis toutes les L périodes lignes parmi les L bits supplémentaires fournis par le générateur et non utilisés par les adresses x, pour déterminer l'adresse y de début de modification de l'ordre de transmission des lignes.

Pour des raisons de simplicité du système, le générateur de séquences pseudoaléatoires peut être synchronisé avec la fréquence image ou trame (25, 30, 50 ou 60 Hz), mais l'interférence parasite apparaîtra alors comme un bruit spatial à structure temporelle fixe et sera par conséquent plus perceptible. Pour limiter ou supprimer ce défaut résiduel, il est donc préférable de prévoir le déroulement de la séquence pseudoaléatoire sur un nombre M de trames important (plus de cent, par exemple), ce qui donne à l'interférence parasite éventuelle une structure de bruit à la fois spatiale et temporelle. Il convient alors d'ajouter, dans la transmission, à destination du générateur de séquences pseudoaléatoires situé à la réception, un signal de synchronisation qui peut être facilement introduit dans une période de suppression trame.

Le brouillage décrit jusqu'à présent est destiné essentiellement à réduire ou supprimer la gêne due aux interférences. Dans ce cas, à chaque instant de synchronisation des générateurs de séquences pseudoaléatoires, on utilise un même mot de chargement, tout à fait connu, à l'émission et à la réception. On peut également rendre conditionnel l'accès au déchiffrement des signaux d'extension de définition. Il suffit pour cela que le mot de chargement des générateurs change périodiquement et ne soit communiqué au récepteur que par une procédure d'accès conditionnel. On peut ainsi réserver aux seuls abonnés ayant acquitté une redevance ou obtenu une autorisation le service supplémentaire constitué par l'extension du format et l'amélioration de la définition de l'image.

On peut encore remarquer que le brouillage par coupure et permutation circulaire des signaux de ligne apporte sur l'ensemble émission et réception un retard égal à deux périodes de ligne au signal qui a subi ce brouillage, par rapport au signal non brouillé. De même, si l'on ajoute un brouillage par brassage vertical de L lignes au brouillage horizontal par coupure et permutation circulaire, c'est un retard égal à 2L périodes de ligne que l'on obtient. Afin de simplifier au maximum le décodeur du récepteur à définition étendue, il est donc judicieux de retarder dans le codeur situé à l'émission tous les signaux non brouillés, et en particulier le signal compatible, d'un délai égal à 2L périodes de ligne. On utilisera, par exemple, 2L mémoires de ligne, L pouvant bien entendu être par exemple égal à 1, ce qui correspond au cas précédent d'absence de brassage vertical des lignes.

L'invention concerne également un étage de réception d'images de télévision comprenant des moyens pour recevoir au moins un signal vidéo d'extension d'une caractéristique d'image émis comme indiqué précédemment, caractérisé en ce qu'il comprend des moyens de déchiffrement de ceux des signaux émis qui ont subi ledit brouillage.

Dans un mode de réalisation préférentiel, cet étage de réception prévu pour recevoir des signaux vidéo (a) d'extension du format des images et/ou des signaux (b) et/ou (c) d'extension des définitions horizontale et verticale desdites images, lesdits signaux ayant été transmis en plus des signaux vidéo classiques correspondant aux images d'origine et après avoir subi une permutation circulaire à partir d'un point de coupure défini pour chaque ligne d'image à l'aide d'un générateur de séquences pseudoaléatoires, caractérisé en ce qu'il comprend un décodeur comprenant lui-même :

(a) une première et une deuxième mémoire placées en parallèle pour l'écriture d'une ligne dans l'une de ces mémoires pendant la lecture de la ligne précédemment écrite dans l'autre et réciproquement, les signaux d'extension reçus étant inscrits à partir de l'adresse x correspondant audit point de coupure propre à chaque ligne, puis en revenant à l'adresse correspondant au début du signal de ligne lorsque la fin de ligne a été atteinte, et en continuant ainsi jusqu'à atteindre à nouveau ladite adresse x ;

(b) un compteur d'écriture et un compteur de lecture, commandés à la fréquence ligne afin d'être réinitialisés à chaque ligne ;

(c) un module de déchiffrement comprenant un circuit de contrôle d'accès et un générateur de séquences pseudoaléatoires et destiné à commander ledit compteur d'écriture.

Les particularités et avantages de l'invention pourront aussi, éventuellement, apparaître de façon plus détaillée dans la description qui suit et dans les dessins annexés, donnés à titre d'exemple non limitatif et dans lesquels :

- la figure 1 montre le principe de brouillage du signal d'une ligne d'image ;
- les figures 2, 3a, 3b illustrent le fonctionnement du système à l'émission ;
- la figure 4 montre un exemple de réalisation d'un décodeur selon l'invention ;
- la figure 5 montre un exemple de générateur de séquences pseudoaléatoires conduisant à un temps maximum d'attente de synchronisation de 5 secondes environ à la mise en route du récepteur.

On a vu ci-dessus que le problème à résoudre était celui de la présence de perturbations dues à la cohérence des interférences se produisant avec les signaux utiles. Pour donner à ces interférences une structure incohérente, le brouillage de type permutation circulaire appliqué à chaque ligne, tel que préconisé par l'UER (Union Européenne de Radiodiffusion) dans ses documents SPB 284 et SPB 352 pour la diffusion de signaux de type MAC, a été adopté.

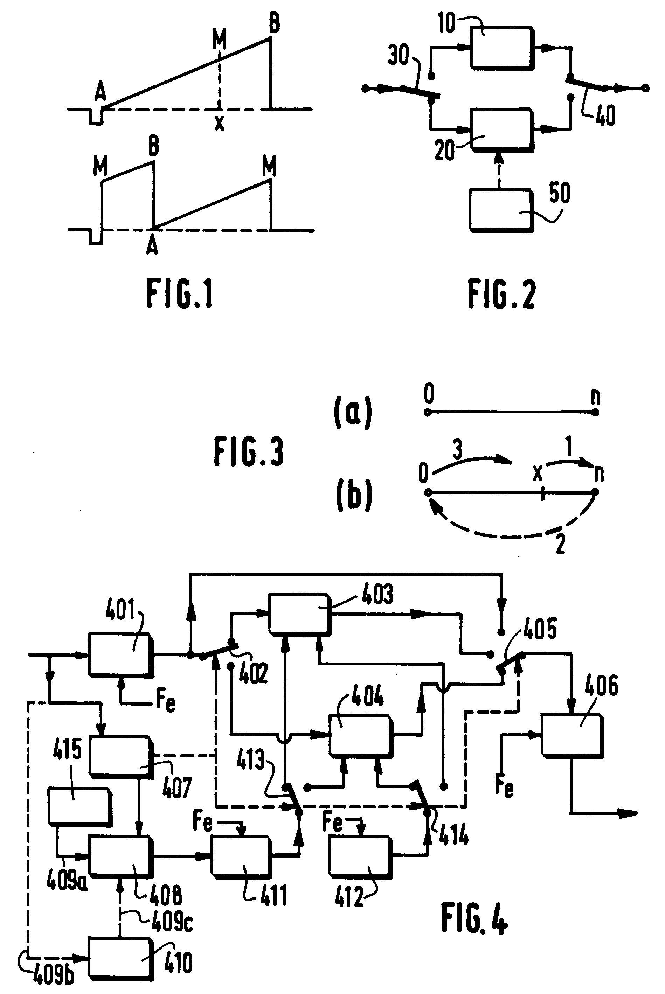

La figure 1 montre le principe de ce brouillage, par coupure du signal (ici AB) d'une ligne d'image en un point M de position aléatoire (à l'adresse x) et interversion des deux fragments de signal ainsi constitués. Les figures 2, 3a et 3b illustrent le fonctionnement du système à l'émission : à un dispositif de codage d'image de type classique, sont ajoutés, en amont, deux mémoires de ligne 10 et 20 à accès aléatoire et deux commutateurs 30 et 40 commandés à la fréquence ligne. Pendant qu'une de ces mémoires est en phase d'écriture, avec inscription normale (fig.3a) du signal courant à partir de l'adresse 0 jusqu'à la dernière adresse n, l'autre est en phase de lecture, mais à partir de l'adresse x (fig.3b) fournie par un générateur de séquences pseudoaléatoires 50 jusqu'à l'adresse n, puis de l'adresse 0 à l'adresse x-1. C'est ce dernier signal, tel que lu, qui est traité pour obtenir les signaux (a), (b), (c) transmis dans les voies (A), (B), (C).

La figure 4 montre un exemple de réalisation d'un décodeur à la réception. Ce décodeur comprend, dans l'exemple décrit, un convertisseur analogique-numérique 401 puis un commutateur 402 à deux positions, permettant de relier la sortie du convertisseur soit à une première mémoire de ligne 403 à accès aléatoire soit à une deuxième mémoire 404 similaire, pour l'écriture de la ligne courante. En sortie de ces mémoires est prévu un commutateur 405 à trois positions dont la sortie est reliée à l'entrée d'un convertisseur numérique-analogique 406 destiné à délivrer les signaux de ligne déchiffrés. Selon sa position, le commutateur 405 permet l'envoi, vers le convertisseur 406, soit de la sortie d'une des mémoires 403 et 404, soit de la sortie de l'autre de ces mémoires, soit directement de la sortie du convertisseur analogique-numérique 401. Les convertisseurs 401 et 406 sont commandés à une fréquence d'échantillonnage $F_e$.

Le décodeur comprend également un compteur intra-trame 407 commandant à l'intérieur de chaque trame le nombre approprié de basculements des commutateurs 402 et 405. Ce compteur est relié à un générateur de séquences pseudoaléatoires 408 destiné à délivrer l'information permettant de définir l'adresse x de coupure, c'est-à-dire le point de début de l'écriture dans celle des deux mémoires 403 ou 404 qui est en phase d'écriture. En effet, le fonctionnement du décodeur est symétrique de celui du codeur : l'écriture du signal reçu est effectuée à partir de l'adresse x jusqu'à l'adresse n puis de l'adresse 0 jusqu'à l'adresse x-1, comme sur la figure 3b, et la lecture est par contre effectuée de l'adresse 0 à l'adresse n, comme sur la figure 3a. Le générateur de séquences pseudoaléatoires 408 reçoit son mot de chargement soit en provenance directe d'une mémoire 415 de type ROM par exemple (connexion 409a en trait continu) lorsque ce mot est toujours le même et bien connu, soit par l'intermédiaire d'un dispositif d'accès conditionnel 410, la connexion 409a étant alors remplacée par les connexions 409b et 409c en trait discontinu. Le décodeur comprend enfin un compteur d'écriture 411 et un compteur de lecture 412, et ces deux compteurs commandent chacun alternativement l'une puis l'autre des deux mémoires de ligne 403 et 404, par l'intermédiaire de commutateurs 413 et 414 dont l'un commande la liaison avec l'autre mémoire, et réciproquement. Ces compteurs d'écriture et de lecture 411 et 412 sont commandés à la fréquence ligne $F_\ell$.

Les signaux d'extension de format ou d'extension de résolution (a), (b) ou (c) peuvent comprendre plusieurs composantes, ce qui conduit généralement à transmettre dans certaines des voies (A), (B) ou (C) plusieurs signaux d'origine différente. On peut employer pour cela un multiplex fréquentiel en utilisant, par exemple, plusieurs porteuses dans la voie (C) ou plusieurs sous-porteuses dans la voie (B), ce qui entraîne, en général, un problème de filtrage pour séparer efficacement les différentes composantes transmises. Une solution plus habile consiste à employer un multiplexage temporel en transmettant successivement les différentes composantes sur la même porteuse et/ou sous-porteuse. Dans ce cas un objet de l'invention consiste à utiliser les mêmes mémoires pour effectuer à la fois le déchiffrement et le démultiplexage des signaux transmis sur la même porteuse et/ou sous-porteuse.

Un exemple de réalisation d'un déchiffreur/démultiplexeur peut être déduit du schéma de la figure 4. Il suffit en effet, dans ce schéma, de diviser les mémoires 403 et 404 en autant de sous-mémoires qu'il y a de composantes différentes transmises sur la même porteuse ou sous-porteuse, d'effectuer l'écriture des signaux reçus dans ces sous-mémoires successivement suivant l'ordre dans lequel il sont envoyés et en commençant par les adresses x respectives, et d'effectuer la lecture des sous-mémoires simultanément ou dans l'ordre requis pour la restitution des signaux, en commençant par les adresses 0 respectives de chaque sous-mémoire. Ceci conduit, en général, à utiliser des fréquences d'écriture et de lecture des mémoires différentes, comme il est habituel de le faire lorsqu'on effectue le décodage de signaux ayant subi un multiplexage temporel, comme les signaux MAC par exemple.

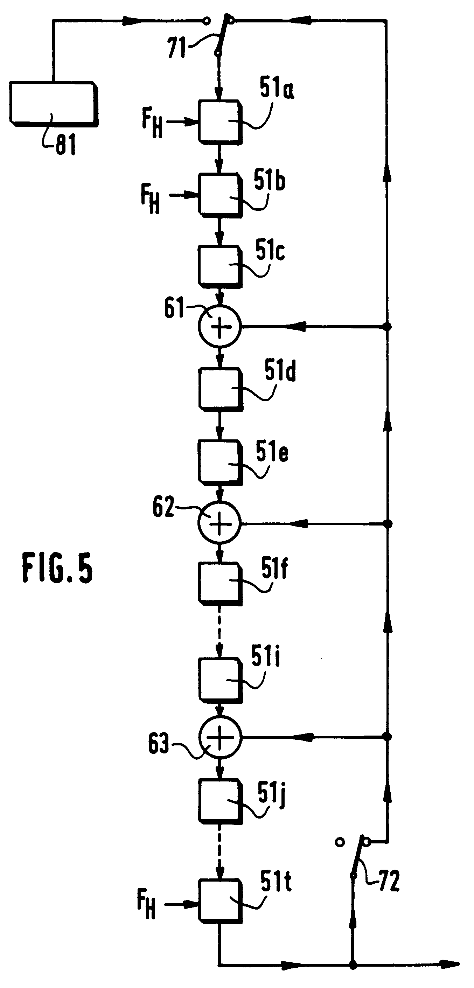

Le générateur de séquences pseudoaléatoires 50 peut être notamment du type à registre à décalage à rebouclage linéaire (en anglais, linear feedback shift register), la longueur du registre étant alors par exemple de 20 cellules si l'on veut que ledit générateur fournisse 8 à 10 bits à chaque période de ligne et que la séquence se déroule sans répétition pendant environ 5 secondes. Au-delà d'une telle durée, le temps d'attente de la synchronisation à la mise en route du récepteur de télévision pourrait, en effet, paraître trop long. Dans cet exemple, qui n'est cependant pas limitatif, le polynôme générateur de degré 20 peut être choisi primitif et irréductible pour que la séquence soit de longueur maximale ($2^{20}$-1) : on retiendra par exemple le polynôme $1 + x^3 + x^5 + x^9 + x^{20}$ qui correspond au générateur de séquences pseudoaléatoires représenté sur la figure 5, les 20 cellules commandées par la fréquence d'horloge $F_H$ étant référencées 51a à 51t et complétées par des additionneurs modulo 2, 61 à 63, des commutateurs 71 et 72, et un circuit 81 de transfert du mot de chargement du générateur 50. Les deux commutateurs 71 et 72 sont en position gauche lors du chargement du générateur à partir d'un mot de 20 bits mis en mémoire dans le circuit 81 et en position droite lors du déroulement de la séquence pseudoaléatoire.

## Revendications

1. Etage d'émission de signaux correspondant à des images de télévision de format traditionnel 4/3 selon les normes NTSC, PAL ou SECAM, comprenant des moyens pour transmettre lesdits signaux correspondant à des images de format traditionnel et des moyens pour transmettre au moins un signal vidéo d'extension d'une caractéristique d'image dans au moins une voie de transmission, caractérisé en ce qu'il comprend des moyens de brouillage d'au moins une fraction dudit ou desdits signaux vidéo d'extension.

2. Etage d'émission selon la revendication 1, prévu pour transmettre des signaux vidéo (a) d'extension du format des images et/ou des signaux vidéo (b) d'extension de la définition horizontale desdites images et/ou des signaux vidéo (c) d'extension de la définition verticale desdites images, caractérisé en ce que lesdits moyens de brouillage comprennent des moyens de brouillage ligne par ligne d'au moins l'un desdits signaux (a), (b), (c).

3. Etage d'émission selon la revendication 2, caractérisé en ce que l'ensemble formé par tous les signaux d'extension (a), (b), (c) subit l'opération de brouillage.

4. Etage d'émission selon la revendication 2, caractérisé en ce que la totalité desdits signaux d'extension (a) et une fraction de chacun desdits signaux d'extension (b), (c) subissent l'opération de brouillage.

5. Etage d'émission selon la revendication 4, caractérisé en ce qu'est exemptée de l'opération de brouillage la fraction des signaux (b) et (c) provenant de la partie de l'image transmise dans le standard d'origine et reçue par les récepteurs conventionnels au format 4/3, et en ce que ces signaux non brouillés sont alors transmis en synchronisme avec les signaux de l'image normale au format 4/3.

6. Etage d'émission selon l'une des revendications 2 à 5, caractérisé en ce que lesdits moyens de brouillage comprennent au moins un premier générateur de séquences pseudoaléatoires (50) et deux mémoires de ligne (10,20), l'une de ces mémoires étant destinée à l'écriture normale du signal courant correspondant à une ligne déterminée pendant la lecture, par l'autre de ces mémoires, du signal courant correspondant à la ligne précédente, et l'autre de ces mémoires étant destinée à la lecture dudit signal courant correspondant à ladite ligne déterminée pendant l'écriture, dans la première de ces mémoires, du signal courant correspondant à la ligne suivante, ou réciproquement, et ledit générateur de séquences pseudoaléatoires étant destiné à délivrer pour chaque ligne concernée une adresse x qui détermine la position d'un point de coupure du signal à partir duquel peut être opérée une permutation circulaire de ce signal, ladite lecture dans l'une ou l'autre des mémoires étant en effet réalisée à partir de cette position.

7. Etage d'émission selon la revendication 6, caractérisé en ce que la fréquence de fonctionnement du générateur de séquences pseudoaléatoires est au moins égale à p fois la fréquence ligne pour délivrer pendant chaque période de ligne un mot pseudoaléatoire de p bits constituant l'adresse x du point de coupure du signal dans la ligne correspondante.

8. Etage d'émission selon l'une des revendications 6 et 7, caractérisé en ce que la fréquence de fonctionnement du générateur de séquences pseudoaléatoires est égale à p fois, ou à un multiple de p fois, la fréquence ligne.

9. Etage d'émission selon l'une des revendications 6 à 8, caractérisé en ce qu'il comprend également des moyens de brouillage vertical de l'image par permutation de position de lignes.

**10.** Etage d'émission selon la revendication 9, caractérisé en ce que lesdits moyens de brouillage vertical comprennent un deuxième générateur de séquences pseudoaléatoires et 2(L-1) mémoires de ligne, ces 2(L-1) mémoires étant destinées à être associées aux première et deuxième mémoires de telle sorte que L d'entre elles soient réservées à l'écriture normale du signal courant pour L lignes de l'image et que les L autres mémoires soient réservées à la lecture de ces lignes ou réciproquement, ladite lecture étant réalisée selon un ordre de transmission des lignes différent de l'ordre normal et résultant d'une modification pseudoaléatoire de cet ordre normal de transmission à partir d'une adresse y choisie parmi les L adresses de ligne considérées.

**11.** Etage d'émission selon la revendication 10, caractérisé en ce que ladite modification d'ordre de transmission est une permutation circulaire.

**12.** Etage d'émission selon la revendication 11, caractérisé en ce que les L lignes considérées sont consécutives et en ce que ladite permutation circulaire est réalisée à partir d'une adresse y comprise dans la gamme (0, L-1) des adresses de ces lignes et délivrée par ledit deuxième générateur de séquences pseudoaléatoires sous la forme d'un mot de $\ell$ bits tel que $2^\ell$ soit inférieur ou égal à L.

**13.** Etage d'émission selon l'une des revendications 10 à 12, caractérisé en ce que les premier et deuxième générateurs de séquences pseudoaléatoires sont regroupés en un unique générateur de séquences pseudoaléatoires, destiné à délivrer à la fois l'adresse x de coupure horizontale du signal de ligne et l'adresse y de début de modification de l'ordre de transmission vertical des L lignes concernées.

**14.** Etage d'émission selon la revendication 13, caractérisé en ce que ladite adresse y est obtenue à partir de $\ell$ bits choisis parmi les L x p bits fournis par ledit générateur de séquences pseudoaléatoires en L périodes de ligne.

**15.** Etage d'émission selon la revendication 13, caractérisé en ce que la fréquence de fonctionnement du générateur de séquences pseudoaléatoires est égale à (p + 1) fois la fréquence ligne, en ce que l'adresse x de coupure est fournie par ledit générateur à partir de p bits délivrés toutes les périodes de ligne, et en ce que l'adresse y de début de modification d'ordre de transmission est fournie par ledit générateur à partir de bits choisis toutes les L périodes de ligne parmi les L bits supplémentaires fournis par ce générateur et non utilisés pour les adresses x de coupure.

**16.** Etage d'émission selon l'une des revendications 9 à 15, caractérisé en ce qu'il comprend des moyens pour retarder de 2L périodes de ligne les signaux qui n'ont pas subi de brouillage, le nombre L pouvant être égal à 1 en l'absence de brouillage vertical des lignes.

**17.** Système de transmission d'images de télévision à définition étendue, caractérisé en ce qu'il comprend un étage d'émission selon l'une des revendications 1 à 16.

**18.** Etage de réception d'images de télévision comprenant des moyens pour recevoir au moins un signal vidéo d'extension d'une caractéristique d'image émis conformément à la revendication 1, caractérisé en ce qu'il comprend des moyens de déchiffrement de ceux des signaux émis qui ont subi ledit brouillage.

**19.** Etage de réception selon la revendication 18, prévu pour recevoir des signaux vidéo (a) d'extension du format des images et/ou des signaux (b) et/ou (c) d'extension des définitions horizontale et verticale desdites images, lesdits signaux ayant été transmis en plus des signaux vidéo classiques correspondant aux images d'origine et après avoir subi une permutation circulaire à partir d'un point de coupure défini pour chaque ligne d'image à l'aide d'un générateur de séquences pseudoaléatoires, caractérisé en ce qu'il comprend un décodeur comprenant lui-même :

(a) une première et une deuxième mémoire (403,404) placées en parallèle pour l'écriture d'une ligne dans l'une de ces mémoires pendant la lecture de la ligne précédemment écrite dans l'autre et réciproquement, les signaux d'extension reçus étant inscrits à partir de l'adresse x correspondant audit point de coupure propre à chaque ligne, puis en revenant à l'adresse correspondant au début du signal de ligne lorsque la fin de ligne a été atteinte, et en continuant ainsi jusqu'à atteindre à nouveau ladite adresse x ;

(b) un compteur d'écriture (411) et un compteur de lecture (412), commandés à la fréquence ligne afin d'être réinitialisés à chaque ligne ;

(c) un module de déchiffrement comprenant un circuit de contrôle d'accès et un générateur de séquences pseudoaléatoires (408) et destiné à commander ledit compteur d'écriture.

20. Etage de réception selon la revendication 19, caractérisé en ce que les générateurs de séquences pseudoaléatoires utilisés à l'émission et à la réception sont identiques et synchronisés par le chargement d'un même mot toutes les trames.

21. Etage de réception selon la revendication 19, caractérisé en ce que les générateurs de séquences pseudoaléatoires utilisés à l'émission et à la réception sont identiques et synchronisés par le chargement d'un même mot toutes les images.

22. Etage de réception selon la revendication 19, caractérisé en ce que les générateurs de séquences pseudoaléatoires utilisés à l'émission et à la réception sont identiques et synchronisés par le chargement d'un même mot toutes les M trames, sous la forme d'un signal de synchronisation spécial situé dans la période de suppression trame avec une périodicité égale à M périodes de trame.

23. Etage de réception selon l'une des revendications 20 à 22, caractérisé en ce que le mot de chargement du générateur de séquences pseudoaléatoires à l'émission et à la réception est, à chaque instant de synchronisation desdits générateurs, toujours le même et bien connu.

24. Etage de réception selon l'une des revendications 20 à 22, caractérisé en ce que le mot de chargement du générateur de séquences pseudoaléatoires varie dans le temps.

25. Etage de réception selon la revendication 23, caractérisé en ce qu'il comprend un dispositif (410) d'accès conditionnel au mot de chargement du générateur de séquences pseudoaléatoires.

26. Etage de réception selon l'une des revendications 24 et 25, caractérisé en ce que les mêmes mémoires sont utilisées à la fois pour effectuer le déchiffrement et pour effectuer le démultiplexage temporel des signaux, lorsque les signaux d'extension de format et/ou d'extension de résolution sont transmis successivement sur une même porteuse et/ou sur une même sous-porteuse.

## Claims

1. A stage for transmitting signals corresponding to television pictures of the traditional aspect ratio 4/3 in accordance with the NTSC, PAL or SECAM Standard, having means for transmitting said signals corresponding to pictures of the traditional aspect ratio and means for transmitting at least one picture characteristic extension video signal via at least one transmission path, characterized in that it comprises means for scrambling at least a part of said extension video signal or signals.

2. A transmission stage as claimed in Claim 1, provided to transmit video signals (a) for extending the aspect ratio of the pictures and/or video signals (b) for extending the horizontal definition of said pictures and/or video signals (c) for extending the vertical definition of said pictures characterized in that said scrambling means comprise means for scrambling at least one of said signals (a), (b), (c) line by line.

3. A transmission stage as claimed in Claim 2, characterized in that all the extension signals (a), (b), (c) is submitted to the scrambling operation.

4. A transmission stage as claimed in Claim 2, characterized in that the totality of said extension signals (a) and a fraction of each of the extension signals (b), (c) are submitted to the scrambling operation.

5. A transmission stage as claimed in Claim 4, characterized in that the fraction of the signals (b) and (c) originating from the portion of the picture transmitted in the original standard and received by the conventional receivers in the aspect ratio 4/3 are excluded from the scrambling operation, and in that these non-scrambled signals are then transmitted in synchronism with the signals from the normal picture in the 4/3 aspect ratio.

6. A transmission stage as claimed in any one of Claims 2 to 5, characterized in that said scrambling means comprise at least a first pseudorandom sequence generator (50) and two line stores (10, 20), one of these stores being intended for the normal writing of the current signal corresponding to a given line during reading, by the other one of these stores of the signal corresponding to the previous line and the other one of these stores being intended for reading said current signal corresponding to said given line during writing, into the first of these stores, of the current signal corresponding to the subsequent line, or vice versa, and said pseudorandom sequence generator being intended to supply for each relevant line an address x which determines the position of a signalcut point from which a cyclic permutation can be effected on this signal, said reading into the one or the other of these line stores being actually effected from this position.

7. A transmission stage as claimed in Claim 6, characterized in that the operating frequency of the pseudorandom sequence generator is at least equal to p times the line frequency to supply during each line period a pseudorandom p-bit word constituting the address x of the cut point of the signal in the corresponding line.

8. A transmission stage as claimed in Claim 6 or 7, characterized in that the operating frequency of the pseudorandom sequence generator is equal to p times, or a multiple of p times, the line frequency.

9. A transmission stage as claimed in any one of Claims 6 to 8, characterized in that it also includes means for vertically scrambling the picture by cyclic permutation of the positions of the lines.

10. A transmission stage as claimed in Claim 9, characterized in that said vertical scrambling means include a second pseudorandom sequence generator and 2(L-1) line stores, these 2(L-1) stores being intended for association with first and second memories in such a manner that L of these memories are reserved for the normal writing of the current signal for L picture lines and that the L other memories are reserved for the reading of these lines or vice versa, said reading being realized in accordance with a sequence of transmitting lines having an order different from the normal order and resulting in a pseudorandom modification of this normal transmission sequence from an address y chosen from among the L line addresses considered.

11. A transmission stage as claimed in Claim 10, characterized in that said modification of the transmission sequence is a cyclic permutation.

12. A transmission stage as claimed in Claim 11, characterized in that the considered L lines are consecutive lines and in that said cyclic permutation is realized from an address y comprised in the range (0, L-1) of addresses of these lines and produced by said second pseudorandom sequence generator in the form of a $\ell$-bit word such that $2^\ell$ is less than or equal to L.

13. A transmission stage as claimed in any one of Claims 10 to 12, characterized in that the first and second pseudorandom sequence generators are combined into one single pseudorandom sequence generator for supplying at the same time the horizontal cut address x of the line signal and the address y of the beginning of the modification of the vertical transmission of the relevant L lines.

14. A transmission stage as claimed in Claim 13, characterized in that said address y is obtained from $\ell$ bits chosen from among the L x p bits produced by said pseudorandom sequence generator in L line periods.

15. A transmission stage as claimed in Claim 13, characterized in that the operating frequency of the pseudorandom sequence generator is equal to (p + 1) times the line frequency, in that the cut address x is supplied by said generator from the p bits supplied during all the line periods, and in that the address y of the start of the transmission sequence modification is supplied by said generator from the bits chosen during all the L line periods from among the L additional bits supplied by this generator and which are not used for the cut address x.

16. A transmission stage as claimed in any one of Claims 9 to 15, characterized in that it comprises means for delaying the signals which were not submitted to the scrambling operation by 2L line periods, the number L being equal to 1 in the absence of vertical line scrambling.

17. An extended definition television transmission system, characterized in that it includes a transmission stage as claimed in any one of Claims 1 to 16.

18. Television picture receiving stage having means for receiving at least one picture characteristic extension video signal transmitted according to Claim 1, characterized in that it comprises means for descrambling those transmitted signals which have been submitted to said scrambling operation.

19. A receiving stage as claimed in Claim 18, intended for receiving video signals (a) for extending the aspect ratio of the picture and/or the video signals (b) and/or (c) for extending the horizontal and vertical definition of said pictures, in which said signals are transmitted and superposed on the conventional video signals which correspond to the original pictures, and after they have been submitted to a cyclic permutation from a cut point defined for each picture line with the aid of a pseudorandom sequence generator, characterized in that it includes a decoder comprising:

(a) a first and a second memory (403, 404) arranged in parallel for writing a line into one of these memories during reading of the line previously entered into the other memory and vice versa, the extension signals received being written from the address x corresponding to said cut point belonging to each line, thereafter returning to the address corresponding to the beginning of the line signal when the end of the line has been reached, and continuing in this way until said address x has been reached again;

(b) a write counter (411) and a read counter (412), which are controlled at the line frequency so as to be reinitialised at each line;

(c) a descrambling module including an access control circuit and a pseudorandom sequence generator (408) and intended to control said write counter.

20. A receiving stage as claimed in Claim 19, characterized in that the pseudorandom sequence generators used at the transmission and the receiving ends are identical and are synchronized by loading the same word during all the fields.

21. A receiving stage as claimed in Claim 19, characterized in that the pseudorandom sequence generators used at the transmission and receiving ends are identical and are synchronized by loading the same word during all the pictures.

22. A receiving stage as claimed in Claim 19, characterized in that the pseudorandom sequence generators used at the transmission and on receiving ends are identical and are synchronized by loading the same word during all the M fields, in the form of a special synchronizing signal situated in the field blanking period with a periodicity equal to M field periods.

23. A receiving stage as claimed in any one of Claims 20 to 22, characterized in that the load word of the pseudorandom sequence generator at the transmission and at the receiving ends is always the same and well-known, at each synchronizing instant of said generators.

24. A receiving stage as claimed in any one of Claims 20 to 22, characterized in that the load word of the pseudorandom sequence generator varies versus time.

25. A receiving stage as claimed in Claim 23, characterized in that it includes a conditional access device (410) for the load word of the pseudorandom sequence generator.

26. A receiving stage as claimed in Claim 24 or 25, characterized in that the same memories are used for both effecting the descrambling and the timedivision demultiplexing of the signals, when the aspect ratio extension signals and/or the resolution extending signals are sequentially transmitted on the same carrier and/or the same subcarrier.

**Patentansprüche**

1. Aussendungsstufe für Signale, die Fernsehbildern im herkömmlichen 4/3-Format nach den NTSC-, PAL- oder SECAM-Normen entsprechen, mit Mitteln zur Ubermittlung diesen Bildern im herkömmlichen Format entsprechender Signale und Mitteln zur Übertragung mindestens eines ein Bildmerkmal erweiternden Videosignals auf mindestens einem Übertragungskanal, dadurch gekennzeichnet, daß sie Mittel zur Störung mindestens eines Teils dieses oder dieser Videoerweiterungssignale umfaßt.

2. Aussendungsstufe nach Anspruch 1 zur Übertragung von Videosignalen (a) für die Erweiterung des Bildformats und/oder von Videosignalen (b) für die Erweiterung der horizontalen Auflösung der Bilder und/oder von Videosignalen (c) für die Erweiterung der vertikalen Auflösung der Bilder, dadurch gekennzeichnet, daß die Störmittel Mittel umfassen, die zeilenweise mindestens eines der Signale (a), (b), (c) stören.

3. Aussendungsstufe nach Anspruch 2, dadurch gekennzeichnet, daß alle Erweiterungssignale (a), (b), (c) die im System vorgesehene Störung erfahren.

4. Aussendungsstufe nach Anspruch 2, dadurch gekennzeichnet, daß alle Erweiterungssignale (a) sowie jeweils ein Teil der Erweiterungssignale (b), (c) die Störung erfahren.

5. Aussendungsstufe nach Anspruch 4, dadurch gekennzeichnet, daß der Teil der Signale (b) und (c) von der Störoperation ausgenommen wird, der der Mitte des im ursprünglichen Standard übermittelten und von herkömmlichen Empfängern im Format 4/3 empfangenen Bildes entspricht und daß die nicht gestörten Signale synchron mit den Signalen des normalen Bildes im Format 4/3 übertragen werden.

6. Aussendungsstufe nach einem der Ansprüche 2 bis 5, dadurch gekennzeichnet, daß die Störmittel mindestens einen ersten Pseudozufallssequenz-Generator (50) und zwei Zeilenspeicher (10, 20) umfassen, wobei der eine dieser Speicher zum normalen Aufzeichnen des aktuellen, einer bestimmten Zeile entsprechenden Signals bestimmt ist, während der andere Speicher das der vorhergehenden Zeile entsprechende Signal aufzeichnet, und daß der andere Speicher zum Auslesen des aktuellen, der bestimmten Zeile entsprechenden Signals bestimmt ist, während im ersten Speicher das der folgenden Zeile entsprechende Signal aufgezeichnet wird, oder umgekehrt, und wobei der Pseudozufallssequenz-Generator dazu dient, für jede betroffene Zeile eine Adresse x zu liefern, die die Position eines Signalunterbrechungspunkts bestimmt, ab dem eine zyklische Vertauschung des Signals vorgenommen werden kann, wobei das Auslesen aus dem einen oder anderen der Speicher jeweils beginnend mit dieser Position erfolgt.

7. Aussendungsstufe nach Anspruch 6, dadurch gekennzeichnet, daß die Betriebsfrequenz des Pseudozufallssequenz-Generators mindestens gleich dem p-Fachen der Zeilenfrequenz ist, um während jeder Zeilenperiode ein Zufallswort von p Bits zu erhalten, das die Adresse x des Signalunterbrechungspunkts in der entsprechenden Zeile definiert.

8. Aussendungsstufe nach einem der Ansprüche 6 und 7, dadurch gekennzeichnet, daß die Betriebsfrequenz des Pseudozufallssequenz-Generators gleich der Zeilenfrequenz, multipliziert mit p oder einem Vielfachen von p, ist.

9. Aussendungsstufe nach einem der Ansprüche 6 bis 8, dadurch gekennzeichnet, daß sie auch Mittel zur vertikalen Störung des Bildes durch Vertauschung der Zeilenposition umfaßt.

10. Aussendungsstufe nach Anspruch 9, dadurch gekennzeichnet, daß die vertikalen Störmittel einen zweiten Pseudozufallssequenz-Generator und 2(L-1) Zeilenspeicher umfassen, wobei die 2(L-1) Speicher dem ersten und dem zweiten Speicher so zuzuordnen sind, daß von ihnen L Speicher dem normalen Aufzeichnen des aktuellen Signals für L Bildzeilen und die anderen L Speicher dem Auslesen dieser Zeilen vorbehalten sind, oder umgekehrt, wobei das Auslesen nach einer von der normalen Reihenfolge abweichenden Zeilenübertragungsreihenfolge erfolgt, die sich aus einer pseudozufälligen Veränderung dieser normalen Übertragungsreihenfolge ab einer unter den betreffenden L Zeilenadressen ausgewählten Zeilenadresse y ergibt.

11. Aussendungsstufe nach Anspruch 10, dadurch gekennzeichnet, daß es sich bei der Veränderung der Übertragungsreihenfolge um eine zyklische Vertauschung handelt.

12. Aussendungsstufe nach Anspruch 11, dadurch gekennzeichnet, daß die betreffenden L Zeilen aufeinander folgen und daß die zyklische Vertauschung ab einer Adresse y durchgeführt wird, die innerhalb des Bereichs (0, L-1) der Adressen dieser Zeilen liegt und von dem zweiten Pseudozufallssequenz-Generator in Form eines Wortes von $\ell$ Bits geliefert wird, so daß $2^{\ell}$ kleiner als oder gleich L ist.

13. Aussendungsstufe nach einem der Ansprüche 10 bis 12, dadurch gekennzeichnet, daß der erste und der zweite Pseudozufallssequenz-Generator in einem einzigen Pseudozufallssequenz-Generator zusammengefaßt sind, der gleichzeitig die horizontale Zeilensignal-Unterbrechungsadresse x und die Adresse y für den Beginn der vertikalen Veränderung der Übertragungsreihenfolge der betreffenden L Zeilen liefert.

14. Aussendungsstufe nach Anspruch 13, dadurch gekennzeichnet, daß die Adresse y aus den $\ell$ Bits erhalten wird, die aus den in L Zeilenperioden vom Pseudozufallssequenz-Generator gelieferten L x p Bits ausgewählt werden.

15. Aussendungsstufe nach Anspruch 13, dadurch gekennzeichnet, daß die Betriebsfrequenz des Pseudozufallssequenz-Generators gleich dem (p + 1)-Fachen der Zeilenfrequenz ist, daß die Unterbrechungsadresse x vom Generator auf der Grundlage von p bei jeder Zeilenperiode gelieferten Bits bereitgestellt wird und daß die Adresse y für den Beginn der Veränderung der Übertragungsreihenfolge vom Generator auf der Grundlage von Bits geliefert wird, die alle L Zeilenperioden aus den L zusätzlichen, von diesem Generator gelieferten und nicht für die Unterbrechungsadressen x verwendeten Bits ausgewählt werden.

16. Aussendungsstufe nach einem der Ansprüche 9 bis 15, dadurch gekennzeichnet, daß sie Mittel zur Verzögerung der Signale, die keine Störung erfahren erhaben, um 2L Zeilenperioden umfaßt, wobei die Anzahl L bei Fehlen einer vertikalen Störung der eilen gleich 1 sein kann.

17. In Auflösung erweitertes Fernsehbildübertragungssystem, dadurch gekennzeichnet, daß es eine Aussendungsstufe nach einem der Ansprüche 1 bis 16 umfaßt.

18. Empfangsstufe für Fernsehbilder mit Mitteln für den Empfang mindestens eines ausgesandten Videosignals nach Anspruch 1, dadurch gekennzeichnet, daß sie Decodermittel für jene ausgesandten Signale umfaßt, die die beschriebene Störung erfahren haben.

19. Empfangsstufe nach Anspruch 18 für den Empfang der Videosignale (a) für die Erweiterung des Bildformats und/oder der Signale (b) und/oder (c) für die Erweiterung der horizontalen und vertikalen Bildauflösung, wobei diese Signale zusätzlich zu den herkömmlichen, den Ausgangsbildern entsprechenden Videosignalen übermittelt werden, nachdem sie eine zyklische Vertauschung ab einem für jede Bildzeile mittels eines Pseudozufallssequenz-Generators definierten Unterbrechungspunkt erfahren haben, dadurch gekennzeichnet, daß sie einen Decoder umfaßt, der seinerseits die folgenden Einrichtungen aufweist:

(a) Einen ersten und einen zweiten Speicher (403, 404), die parallel geschaltet sind und dazu dienen, eine Zeile in diesem Speicher aufzuzeichnen, während aus dem anderen Speicher die zuvor dort aufgezeichnete Zeile ausgelesen wird, und umgekehrt, wobei die empfangenen Erweiterungssignale ab der Adresse x, die dem jeder Zeile eigenen Unterbrechungspunkt entspricht, und nach Erreichen des Zeilenendes und Rückkehr an die dem Beginn des Zeilensignals entsprechende Adresse ab da solange aufgezeichnet wird, bis die Adresse x wieder erreicht ist;

(b) einen Schreib- (411) und einen Lesezähler (412), die mit der Zeilenfrequenz so gesteuert werden, daß sie bei jeder Zeile wieder rückgestellt werden;

(c) ein Decodermodul mit einer Zugriffssteuerschaltung und einem Pseudozufallssequenz-Generator (408) zur Steuerung des Scbreibzählers.

20. Empfangsstufe nach Anspruch 19, dadurch gekennzeichnet, daß die Pseudozufallssequenz-Generatoren am Sende- und Empfangsende gleich ausgebildet und durch Laden eines gleichen Wortes bei jedem Halbbild synchronisiert sind.

21. Empfangsstufe nach Anspruch 19, dadurch gekennzeichnet, daß die Pseudozufallssequenz-Generatoren am Sende- und Empfangsende gleich ausgebildet und durch Laden eines gleichen Wortes bei jedem Bild synchronisiert sind.

22. Empfangsstufe nach Anspruch 19, dadurch gekennzeichnet, daß die Pseudozufallssequenz-Generatoren am Sende- und Empfangsende gleich ausgebildet und durch Laden eines gleichen Wortes alle M Halbbilder in Form eines speziellen Synchronisationssignals, das jeweils im Abstand von M Halbbildperioden in der Halbbild-Unterdrückungsperiode eingeschoben wird, synchronisiert sind.

23. Empfangsstufe nach einem der Ansprüche 20 bis 22, dadurch gekennzeichnet, daß das Ladewort des Pseudozufallssequenz-Generators am Sende- und am Empfangsende in jedem Augenblick der Synchronisierung dieser Generatoren immer gleich und bekannt ist.

24. Empfangsstufe nach einem der Ansprüche 20 bis 22, dadurch gekennzeichnet, daß das Ladewort des Pseudozufallssequenz-Generators sich mit der Zeit verändert.

25. Empfangsstufe nach Anspruch 23, dadurch gekennzeichnet, daß sie ein Bauelement (410) mit bedingtem Zugriff auf das Ladewort des Pseudozufallssequenz-Generators umfaßt.

26. Empfangsstufe nach einem der Ansprüche 24 und 25, dadurch gekennzeichnet, daß dieselben Speicher gleichzeitig für die Decodierung und für das zeitliche Demultiplexen der Signale verwendet werden, wenn die Formaterweiterungssignale und/oder die Auflösungserweiterungssignale nacheinander auf der gleichen Trägerfrequenz und/oder der gleichen Nebenträgerfrequenz übertragen werden.

FIG.1

FIG.2

FIG.3

(a)

(b)

FIG.4

FIG.5